# EUROPEAN PATENT APPLICATION

(11) **EP 4 625 590 A1**
(43) Date of publication of application: **01.10.2025**
(21) Application number: 23949046.9
(22) Date of filing: 14.11.2023
(51) Int. Cl.: H01M 10/0568, H01M 10/0566, H01M 10/0564, H01M 10/056

(54) **ELECTROLYTE, SECONDARY BATTERY, AND ELECTRICAL APPARATUS**

(30) Priority: 16.08.2023 CN 202311033121
(71) Applicant: Contemporary Amperex Technology Co., Limited, Ningde, Fujian 352100 (CN)
(72) Inventor: LIAO, Shangju, Ningde, Fujian 352100 (CN); LIU, Chengyong, Ningde, Fujian 352100 (CN); YAN, Xiaolin, Ningde, Fujian 352100 (CN); YE, Fangjun, Ningde, Fujian 352100 (CN); LU, Xiaojie, Ningde, Fujian 352100 (CN); CAI, Xiaolan, Ningde, Fujian 352100 (CN); ZHOU, Qicheng, Ningde, Fujian 352100 (CN)
(74) Representative: Kraus & Lederer PartGmbB
(86) International application number: PCT/CN2023/131510
(87) International publication number: WO 2025/035628

(57) **Abstract**

The present application belongs to the technical field of batteries, and in particular, relates to an electrolyte solution, a secondary battery, and an electric device. The electrolyte solution provided in the present application contains sodium salt and lithium salt. A deposition overpotential of lithium metal in the electrolyte solution is higher than a deposition overpotential of sodium metal. The electrolyte solution has film-forming selectivity, which is beneficial to improving the cycling performance of the secondary battery. The secondary battery provided in the present application includes the electrolyte solution and a positive electrode sheet. An active material in the positive electrode sheet includes a sodium-ion positive electrode active material and a lithium-ion positive electrode active material, and a charging plateau voltage of the sodium-ion positive electrode active material in the battery is lower than a charging plateau voltage of the lithium-ion positive electrode active material in the battery. The electrolyte solution in the secondary battery is adapted to the positive electrode sheet, which further improves the storage performance of the secondary battery.

## Description

### CROSS-REFERENCE TO RELATED APPLICATIONS

This application claims priority to Chinese Patent Application No. 202311033121.1, filed on August 16, 2023 and entitled "Electrolyte Solution, Secondary Battery, and Electric Device", which is incorporated herein by reference in its entirety.

### TECHNICAL FIELD

The present application relates to the field of batteries, and in particular, to an electrolyte solution, a secondary battery, and an electric device.

### BACKGROUND

In recent years, with the development of secondary battery technologies, secondary batteries have been widely applied in energy storage power systems such as hydraulic, thermal, wind, and solar power plants, as well as in various fields of power supplies for electronic equipment, power tools, electric bicycles, electric motorcycles, electric vehicles, and so on.

With the development of science and technology and society, the performance of various products has been further improved, and therefore higher requirements are also put forward for the cycling performance and storage performance of secondary batteries. How to provide a secondary battery with good cycling performance and storage performance is one of the directions that those skilled in the art focus on.

### SUMMARY

In view of the above problems, the present application provides an electrolyte solution, a secondary battery, and an electric device. The cycling performance and storage performance of the secondary battery can be both improved.

In a first aspect of the present application, an electrolyte solution is provided. The electrolyte solution contains sodium salt and lithium salt. A deposition overpotential of lithium metal in the electrolyte solution is higher than a deposition overpotential of sodium metal.

The deposition overpotential in the present application is used to reflect the deposition efficiency of the metal in the electrolyte solution. Generally, the lower the deposition overpotential is, the smaller the deposition resistance of the metal is, and the easier the deposition is, but the less easily the electrolyte solution forms a film. The electrolyte solution provided in the present application has film-forming selectivity, where the deposition overpotential of the lithium metal in the electrolyte solution is higher than the deposition overpotential of the sodium metal, which is beneficial to the film-forming property of a surface of the lithium metal and the poor film-forming property of a surface of the sodium metal. Specifically, the sodium metal is less prone to forming a solid electrolyte interphase (SEI) film in the electrolyte solution, and can be deposited well, which is beneficial to prolonging the cycle life of the secondary battery; and the lithium metal is prone to forming the SEI film in the electrolyte solution. In the secondary battery, if the lithium metal is further deposited on the surface of the sodium metal and the stable SEI film is formed on the surface of the lithium metal, the storage performance of the secondary battery can be effectively improved on the basis of prolonging the cycle life of the secondary battery.

In some embodiments of the present application, the electrolyte solution satisfies:

the deposition overpotential of the lithium metal in the electrolyte solution is higher than the deposition overpotential of the sodium metal by 20 mV or more.

In some embodiments of the present application, the electrolyte solution satisfies one or a combination of the following two conditions:
(1.1) the deposition overpotential of the lithium metal in the electrolyte solution is greater than 30 mV, preferably 32 mV to 70 mV; and
(1.2) the deposition overpotential of the sodium metal in the electrolyte solution is less than 20 mV, preferably 5 mV to 18 mV.

In some embodiments of the present application, a concentration of the lithium salt is lower than a concentration of the sodium salt.

In some embodiments of the present application, the electrolyte solution satisfies one or a combination of the following two conditions:
(2.1) the concentration of the lithium salt is not lower than 0.1 mol/L, preferably 0.1 mol/L to 0.2 mol/L; and
(2.2) the concentration of the sodium salt is not lower than 0.8 mol/L, preferably 0.8 mol/L to 1.5 mol/L.

In some embodiments of the present application, the lithium salt includes one or a combination of two or more of lithium bis(fluorosulfonyl)imide, lithium bis(oxalato)borate, and lithium bis(trifluoromethanesulfonyl)imide.

In some embodiments of the present application, the sodium salt includes one or a combination of two or more of sodium hexafluorophosphate, sodium hexafluoroarsenate, and sodium tetrafluoroborate.

In some embodiments of the present application, the electrolyte solution contains an ether-based solvent.

In some embodiments of the present application, the ether-based solvent includes one or a combination of two or more of dimethoxymethane (DMM), dimethoxyethane (DME), and diethoxyethane (DEE).

In a second aspect of the present application, a secondary battery is provided, including the electrolyte solution in the first aspect.

In some embodiments of the present application, the secondary battery further includes:
a positive electrode sheet, including a positive electrode current collector and a positive electrode active material disposed on at least one side surface of the positive electrode current collector;
a negative electrode sheet, including a negative electrode current collector; and
a separator,
where the positive electrode active material includes a sodium-ion positive electrode active material and a lithium-ion positive electrode active material, and a charging plateau voltage of the sodium-ion positive electrode active material in the battery is lower than a charging plateau voltage of the lithium-ion positive electrode active material in the battery.

In the present application, in order to achieve the purpose of depositing the lithium metal on the surface of the sodium metal, a charging plateau of the lithium-ion positive electrode active material and a charging plateau of the sodium-ion positive electrode active material are further controlled to have a difference in voltage, and the lithium metal prone to forming the stable SEI film serves as a protective layer to be plated on the surface of the sodium metal by means of high-voltage charging to prevent a continuous reaction between the sodium metal and the electrolyte solution, thereby prolonging the storage life of the secondary battery.

When the secondary battery in the present application is charged at the charging plateau voltage of the sodium-ion positive electrode active material, a sodium metal layer is first formed on a surface of the negative electrode current collector, and sodium ions are repeatedly deposited and stripped on the surface of the negative electrode current collector, which can achieve the long-term cycling performance of the secondary battery. When the secondary battery is continuously charged to a voltage above the charging plateau voltage of the lithium-ion positive electrode active material, lithium ions are deposited on the surface of the sodium metal layer to form a lithium metal plating layer. The lithium metal plating layer can react with a film-forming component in the electrolyte solution to form the stable SEI film to isolate a negative electrode from the electrolyte solution, thereby reducing the probability of reaction between the negative electrode and the electrolyte solution, and improving the stability of the lithium-sodium metal as the negative electrode. Therefore, the secondary battery provided in the present application can be improved in both the cycling performance and the storage performance.

In some embodiments of the present application, the charging plateau voltage of the sodium-ion positive electrode active material in the battery is at least 0.1 V lower than the charging plateau voltage of the lithium-ion positive electrode active material in the battery.

In some embodiments of the present application, the charging plateau voltage of the sodium-ion positive electrode active material in the battery is 0.1 V to 1 V lower than the charging plateau voltage of the lithium-ion positive electrode active material in the battery.

In some embodiments of the present application, the charging plateau voltage of the sodium-ion positive electrode active material in the battery is 0.2 V to 0.6 V lower than the charging plateau voltage of the lithium-ion positive electrode active material in the battery.

In some embodiments of the present application, the charging plateau voltage of the sodium-ion positive electrode active material in the battery is 2.0 V to 3.6 V.

In some embodiments of the present application, the charging plateau voltage of the sodium-ion positive electrode active material in the battery is 3.2 V to 3.4 V.

In some embodiments of the present application, the sodium-ion positive electrode active material includes one or a combination of two or more of a polyanionic compound or a Prussian blue-like compound; and
preferably, the sodium-ion positive electrode active material includes one or a combination of two or more of Na₃V₂(PO₄)₃, Na₂Fe[Fe(CN)₆], Na₂Mn[Fe(CN)₆], and Na₂Mn[Mn(CN)₆].

In some embodiments of the present application, the charging plateau voltage of the lithium-ion positive electrode active material in the battery is 3.0 V to 4.3 V.

In some embodiments of the present application, the charging plateau voltage of the lithium-ion positive electrode active material in the battery is 3.4 V to 4.0 V.

In some embodiments of the present application, the lithium-ion positive electrode active material includes one or a combination of two or more of lithium cobalt oxide, lithium nickel oxide, lithium manganese oxide, lithium nickel manganese oxide, lithium nickel cobalt manganese oxide, lithium nickel cobalt aluminum oxide, and olivine-structured lithium-containing phosphate; and
preferably, the lithium-ion positive electrode active material includes one or a combination of two or more of LiFePO₄, LiMn₂O₄, LiCoO₂, and LiNi_{0.8}CO_{0.1}Mn_{0.1}O₂.

In some embodiments of the present application, when the secondary battery is charged at the charging plateau voltage of the sodium-ion positive electrode active material, a sodium metal layer is formed on a surface of the negative electrode current collector;
when the secondary battery is charged at the charging plateau voltage of the lithium-ion positive electrode active material, a lithium metal plating layer is formed on a surface of the sodium metal layer; and
preferably, a thickness of the lithium metal plating layer is 0.5 µm to 3.0 µm.

In some embodiments of the present application, the negative electrode sheet is a negative electrode current collector.

In a third aspect of the present application, an electric device is provided, including the electrolyte solution in the first aspect or the secondary battery in the second aspect.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### DESCRIPTION OF EMBODIMENTS

Hereinafter, embodiments specifically disclosing a secondary battery and an electric device in the present application are described in detail with reference to the drawings as appropriate. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand this application, and are not intended to limit subject matters described in the claims.

The "range" disclosed in the present application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if ranges of 60-120 and 80-110 are listed for specific parameters, it is understood that the ranges of 60-110 and 80-120 are also expected. Furthermore, if the smallest values 1 and 2 of a range are listed, and if the largest values 3, 4 and 5 of the range are listed, the following ranges may all be expected: 1-3, 1-4, 1-5, 2-3, 2-4, and 2-5. In this application, unless otherwise stated, a numerical range "a-b" represents a shorthand representation for a combination of any real numbers between a and b, where both a and b are real numbers. For example, a numerical range of "0-5" represents that all real numbers in the range of "0-5" have been listed herein, and "0-5" is merely a shorthand representation of combinations of these numerical values. In addition, when a parameter is expressed as an integer ≥ 2, it is equivalent to disclosing that the parameter is an integer such as 2, 3, 4, 5, 6, 7, 8, 9, 10, 11, or 12.

Unless otherwise specified, all embodiments and optional embodiments of this application may be combined with each other to form new technical solutions.

Unless otherwise specified, all technical features and optional technical features of this application can be combined with each other to form new technical solutions.

Unless otherwise specified, all steps in the present application may be performed sequentially or randomly, preferably sequentially. For example, the method includes steps (a) and (b), meaning that the method may include steps (a) and (b) performed sequentially or steps (b) and (a) performed sequentially. For example, the mentioned method may further include step (c), meaning that step (c) may be added to the method in any order, e.g., the method may include steps (a), (b) and (c), or steps (a), (c) and (b), or steps (c), (a) and (b), etc.

Unless otherwise specified, the terms "include/comprise" and "contain" as mentioned in the present application are meant to be open or closed. For example, the "include/comprise" and "contain" may mean that other components not listed may be further included/comprised or contained, or only the listed components may be included/comprised or contained.

Unless otherwise specified, in the present application, the term "or" is inclusive. For example, the phrase "A or B" means "A, B, or both A and B". More specifically, the condition "A or B" is satisfied by any one of A being true (or present) and B being false (or absent), A being false (or absent) and B being true (or present), or both A and B being true (or present).

Unless otherwise specified, in the present application, the terms "first", "second", and the like are used only for distinguishing between different objects, but cannot be construed to indicate or imply relative importance or implicitly indicate the number, specific order, or primary/secondary relationship of indicated technical features.

Unless otherwise specified, in the present application, the term "a plurality of" means two or more (including two). Similarly, the term "a plurality of groups" means two or more groups (including two groups), and the term "a plurality of pieces" means two or more pieces (including two pieces).

A negative electrode active material of a lithium-ion battery includes a carbonaceous material, such as graphite. However, the graphite has a limited gravimetric specific capacity, and there is very little room for improvement in its volumetric specific capacity, severely restricting further enhancement in the gravimetric energy density and volumetric energy density of the lithium-ion battery. With the development of current consumer electronic products and electric vehicle technologies, it is urgent to develop a battery system with higher energy density.

Sodium metal has a very high gravimetric energy density and volumetric energy density, and thus is often used as a negative electrode of a metal battery. To further achieve a higher energy density of a battery cell, a "negative electrode-free" metal battery has also been developed, in which sodium is deintercalated from a positive electrode material and in-situ deposited onto a negative electrode current collector. Meanwhile, the manufacturing feasibility and safety of the battery cell are also greatly improved without pre-lamination/coating/deposition of highly active metal on a negative electrode side. However, deposition of a negative electrode-free sodium battery on a surface of the negative electrode current collector requires a higher overpotential, which also easily leads to uneven metal deposition. This exacerbates a side reaction with an electrolyte solution, greatly consumes active sodium, and ultimately affects the cycling performance and storage life of the battery cell.

At present, a method of balancing between film formation and non-film formation is mostly adopted to overcome the above defects. Specifically, a thin and dense SEI layer is formed on a surface of the negative electrode as much as possible, in order to maximize the storage life while meeting the requirements for the cycle life. However, the two methods have the following advantages and disadvantages:
1. When an electrolyte solution prone to forming an SEI film is selected, the SEI film can prevent a reaction between the electrolyte solution and the sodium metal during storage, achieving a long storage life. However, during cycling, the electrolyte solution continuously reacts with freshly deposited sodium metal to form a new SEI, resulting in the consumption of the sodium metal and the electrolyte solution. In addition, as the SEI serves as a rate-determining step, the sodium metal is more prone to dendrite growth at a defect of the SEI film. The dendrite growth will form a larger specific surface area, and dendrites are likely to break during cycling, ultimately causing a greater capacity loss. As a result, the requirements of long-term cycling cannot be met.
2. When an electrolyte solution less prone to forming the SEI film is selected, although the sodium metal can be deposited in a block shape to reduce the specific surface area and significantly prolong the cycle life, the sodium metal without SEI protection continuously reacts with the electrolyte solution to cause consumption, so that the long-term storage requirements of the secondary battery free of the sodium metal as the negative electrode cannot be met.

To solve the above technical problems, an electrolyte solution is obtained through experimental exploration in the present application. The electrolyte solution contains sodium salt and lithium salt, where a deposition overpotential of lithium metal in the electrolyte solution is higher than a deposition overpotential of sodium metal. The electrolyte solution provided in the present application has film-forming selectivity, where the deposition overpotential of the lithium metal in the electrolyte solution is higher than the deposition overpotential of the sodium metal, which is beneficial to the film-forming property of a surface of the lithium metal and the poor film-forming property of a surface of the sodium metal. Specifically, the sodium metal is less prone to forming an SEI film in the electrolyte solution, and can be deposited well, which is beneficial to prolonging the cycle life of the secondary battery; and the lithium metal is prone to forming the SEI film in the electrolyte solution. In the secondary battery, if the lithium metal is further deposited on the surface of the sodium metal and the stable SEI film is formed on the surface of the lithium metal, the storage performance of the secondary battery can be effectively improved on the basis of prolonging the cycle life of the secondary battery.

In some embodiments of the present application, a secondary battery is provided. The secondary battery further includes a positive electrode sheet, a negative electrode sheet, and a separator in addition to the above electrolyte solution. The positive electrode sheet includes a positive electrode current collector and a positive electrode active material disposed on at least one side surface of the positive electrode current collector. The negative electrode sheet includes a negative electrode current collector. The positive electrode active material includes a sodium-ion positive electrode active material and a lithium-ion positive electrode active material. A charging plateau voltage of the sodium-ion positive electrode active material in the battery is lower than a charging plateau voltage of the lithium-ion positive electrode active material in the battery.

In the present application, in order to achieve the purpose of depositing the lithium metal on the surface of the sodium metal, a charging plateau of the lithium-ion positive electrode active material and a charging plateau of the sodium-ion positive electrode active material are further controlled to have a difference in voltage, and the lithium metal prone to forming the stable SEI film serves as a protective layer to be plated on the surface of the sodium metal by means of high-voltage charging to prevent a continuous reaction between the sodium metal and the electrolyte solution, thereby prolonging the storage life of the secondary battery. Specifically, when the secondary battery in the present application is charged at the charging plateau voltage of the sodium-ion positive electrode active material, a sodium metal layer is first formed on a surface of the negative electrode current collector, and sodium ions are repeatedly deposited and stripped on the surface of the negative electrode current collector, which can achieve the long-term cycling performance of the secondary battery. When the secondary battery is continuously charged to a voltage above the charging plateau voltage of the lithium-ion positive electrode active material, lithium ions are deposited on the surface of the sodium metal layer to form a lithium metal plating layer. The lithium metal plating layer can react with a film-forming component in the electrolyte solution to form the stable SEI film to isolate a negative electrode from the electrolyte solution, thereby reducing the probability of reaction between the negative electrode and the electrolyte solution, and improving the stability of the lithium-sodium metal as the negative electrode. Therefore, the secondary battery provided in the present application can be improved in both the cycling performance and the storage performance.

The secondary battery provided in the present application can be used as a power supply or an energy storage unit for an electric device. For example, it can be used in, but not limited to, laptops, pen-based computers, mobile computers, e-book readers, portable phones, portable fax machines, portable copiers, portable printers, over-ear stereo headphones, video recorders, liquid crystal display televisions, portable cleaners, portable CD players, mini-discs, transceivers, electronic notebooks, calculators, memory cards, portable recorders, radios, backup power supplies, motors, automobiles, motorcycles, electric bicycles, bicycles, lighting fixtures, toys, game consoles, clocks, power tools, flashlights, cameras, large household storage batteries, energy storage systems, and capacitors.

### [Electrolyte solution]

According to some embodiments of the present application, the electrolyte solution is used to conduct sodium ions and lithium ions, and contains sodium salt and lithium salt as electrolyte salts, where a deposition overpotential of lithium metal in the electrolyte solution is higher than a deposition overpotential of sodium metal.

The deposition overpotential in the present application is used to measure the deposition efficiency of each metal in the electrolyte solution. Generally, the lower the overpotential is, the smaller the deposition resistance is, and the more likely the deposition is to occur. The deposition overpotential of each metal in the electrolyte solution may be directly measured. For example, an overpotential of a Na-Na symmetric cell is tested using a Neware charge-discharge machine, the cell is charged for 1 h and then discharged for 1 h at a current density of 1 mA/cm⁻², each charge-discharge process is regarded as one cycle, with 100 cycles as a cut-off condition, the stability of the electrolyte solution is evaluated through potential fluctuation, and finally suitable electrolyte salts are obtained through exploration.

In the present application, due to a low electrochemical potential of lithium, in the same electrolyte solution, the lithium is more likely to react with the electrolyte solution than sodium to form an SEI.

The electrolyte solution provided in the present application has film-forming selectivity, where the deposition overpotential of the lithium metal in the electrolyte solution is higher than the deposition overpotential of the sodium metal, which is beneficial to the film-forming property of a surface of the lithium metal and the poor film-forming property of a surface of the sodium metal. Specifically, the sodium metal is less prone to forming an SEI film in the electrolyte solution, and can be deposited well, which is beneficial to prolonging the cycle life of the secondary battery; and the lithium metal is prone to forming the SEI film in the electrolyte solution. In the secondary battery, if the lithium metal is further deposited on the surface of the sodium metal and the stable SEI film is formed on the surface of the lithium metal, the lithium metal and the SEI film prevent a reaction between the sodium metal and the electrolyte solution to prolong the storage life of the secondary battery.

According to some embodiments of the present application, the deposition overpotential of the lithium metal in the electrolyte solution is higher than the deposition overpotential of the sodium metal by 20 mV or more.

In the present application, the deposition overpotential of the lithium metal is selected to be higher than the deposition overpotential of the sodium metal by 20 mV or more, which is beneficial to screening out suitable electrolyte salts to improve the cycle life and storage performance of the secondary battery.

According to some embodiments of the present application, the deposition overpotential of the lithium metal in the electrolyte solution is greater than 30 mV.

The electrolyte solution in the present application needs to meet the requirements for the favorable film-forming property of the lithium metal. The deposition overpotential of the lithium metal in the electrolyte solution is greater than 30 mV, so that it is beneficial to meeting the requirements for the favorable film-forming property of the lithium metal, and a suitable lithium salt can be easily screened out. Meanwhile, the deposition overpotential of the lithium salt in the electrolyte solution cannot be changed without limit due to various factors such as a type, concentration and solvent component of the lithium salt.

According to some embodiments of the present application, the deposition overpotential of the lithium metal in the electrolyte solution is 32 mV to 70 mV.

**In a** specific embodiment of the present application, the type of the lithium salt with the deposition overpotential of the lithium metal in the electrolyte solution of 32 mV to 70 mV is mainly explored, which is only for the purpose of explaining the lithium salt, rather than limiting it.

According to some embodiments of the present application, the deposition overpotential of the sodium metal in the electrolyte solution is less than 20 mV.

The electrolyte solution in the present application needs to meet the requirements for the poor film-forming property of the sodium metal. The deposition overpotential of the sodium metal in the electrolyte solution is less than 20 mV, so that it is beneficial to meeting the requirements for the poor film-forming property of the sodium metal, and a suitable sodium salt can be easily screened out. Meanwhile, the deposition overpotential of the sodium metal in the electrolyte solution is not equal to zero.

According to some embodiments of the present application, the deposition overpotential of the sodium metal in the electrolyte solution is 5 mV to 18 mV.

**In a** specific embodiment of the present application, the type of the sodium salt with the deposition overpotential of the sodium metal in the electrolyte solution of 5 mV to 18 mV is mainly explored, which is only for the purpose of explaining the sodium salt, rather than limiting it.

According to some embodiments of the present application, a concentration of the lithium salt is lower than a concentration of the sodium salt.

In the present application, according to the above description, the sodium-ion positive electrode active material is used to achieve the long-term cycling process of the secondary battery, and the lithium-ion positive electrode active material is used to improve the storage performance of the secondary battery. To improve the comprehensive performance of the secondary battery in the present application, in the positive electrode active material, the sodium-ion positive electrode active material is used as a main material, and the lithium-ion positive electrode active material assists the sodium-ion positive electrode active material to prevent a side reaction caused by contact between the sodium metal and the electrolyte solution. It is determined from respective usage amounts that in an ideal state, the usage amount of the sodium-ion positive electrode active material is greater than the usage amount of the lithium-ion positive electrode active material. Correspondingly, in the electrolyte solution, the concentration of the lithium salt is lower than the concentration of the sodium salt.

According to some embodiments of the present application, the concentration of the lithium salt is not lower than 0.1 mol/L.

According to some embodiments of the present application, the concentration of the lithium salt is 0.1 mol/L to 0.2 mol/L.

According to some embodiments of the present application, the concentration of the sodium salt is not lower than 0.8 mol/L.

According to some embodiments of the present application, the concentration of the sodium salt is 0.8 mol/L to 1.5 mol/L.

In the present application, the concentration of the lithium salt and the concentration of the sodium salt in the electrolyte solution are selected to satisfy the above numerical ranges, which is beneficial to matching between the electrolyte solution and the positive electrode active material.

According to some embodiments of the present application, the lithium salt includes one or a combination of two or more of lithium bis(fluorosulfonyl)imide (LiFSI), lithium bis(oxalato)borate (LiBOB), and lithium bis(trifluoromethanesulfonyl)imide (LiTFSI).

The type of the lithium salt selected in the present application meets the requirements for the deposition overpotential of the lithium salt in the electrolyte solution, which is beneficial to formation of the SEI film.

According to some embodiments of the present application, the sodium salt includes one or a combination of two or more of sodium hexafluorophosphate (NaPF₆), sodium hexafluoroarsenate (NaAsF₆), and sodium tetrafluoroborate.

The type of the sodium salt selected in the present application meets the requirements for the deposition overpotential of the sodium salt in the electrolyte solution, making it difficult to form the SEI film.

According to some embodiments of the present application, the electrolyte solution in the present application contains a solvent, where the solvent includes an ether-based solvent.

In the present application, during cycling, the sodium metal is deposited on the surface of the negative electrode current collector to form a sodium metal layer with higher stability in the ether-based solvent than in other solvents such as carbonate solvents.

According to some embodiments of the present application, the ether-based solvent includes one or a combination of two or more of dimethoxymethane (DMM), dimethoxyethane (DME), and diethoxyethane (DEE).

The type of the ether-based solvent selected in the present application is beneficial to improving solvation structures of the sodium ions and the lithium ions, and further affects a deposition morphology of the negative electrode to ultimately improve the cycling stability of the secondary battery.

**In** the present application, the negative electrode sheet is a negative electrode current collector.

The negative electrode sheet in the present application is a negative electrode current collector, so that a secondary battery free of metal as a negative electrode is prepared. A lithium-sodium potential difference is adopted in the secondary battery free of the metal as the negative electrode. During charging, the sodium metal is reversibly deposited and stripped at a low potential, achieving low loss and long-term cycling. When storage is required, a lithium metal layer is plated on the surface of the sodium metal during high-potential charging. The lithium metal has high reaction activity and is prone to forming an SEI, which can prevent a side reaction between the sodium metal as the negative electrode and the electrolyte solution, thereby achieving a long storage life.

The type of the ether-based solvent selected in the present application is beneficial to improving solvation structures of the sodium ions and the lithium ions, and further affects a deposition morphology of the negative electrode to ultimately improve the cycling stability of the secondary battery.

### Secondary battery

According to some embodiments of the present application, the present application provides a secondary battery. The secondary battery includes a positive electrode sheet, a negative electrode sheet, a separator located between the positive electrode sheet and the negative electrode sheet, and an electrolyte solution. The positive electrode sheet includes a positive electrode current collector and a positive electrode active material disposed on at least one side surface of the positive electrode current collector. The negative electrode sheet includes a negative electrode current collector. The positive electrode active material includes a sodium-ion positive electrode active material and a lithium-ion positive electrode active material. A charging plateau voltage of the sodium-ion positive electrode active material in the battery is lower than a charging plateau voltage of the lithium-ion positive electrode active material in the battery.

In the present application, a method for determining a charging plateau voltage of a positive electrode material in the battery includes any conventional form in the art. For example, a direct measurement method may be used. Specifically, the sodium-ion positive electrode active material or the lithium-ion positive electrode active material is prepared into a button cell, the button cell is subjected to a charging test, a charging characteristic curve is drawn with a capacity as an abscissa and a voltage as an ordinate, and the charging plateau voltage is determined based on the charging characteristic curve. In the present application, the same test conditions and the same method are used to determine the charging plateau voltage of the sodium-ion positive electrode active material and the charging plateau voltage of the lithium-ion positive electrode active material.

In the present application, in order to achieve the purpose of depositing the lithium metal on the surface of the sodium metal, a charging plateau of the lithium-ion positive electrode active material and a charging plateau of the sodium-ion positive electrode active material are further controlled to have a difference in voltage, and the lithium metal prone to forming the stable SEI film serves as a protective layer to be plated on the surface of the sodium metal by means of high-voltage charging to prevent a continuous reaction between the sodium metal and the electrolyte solution, thereby prolonging the storage life of the secondary battery. Meanwhile, the electrolyte solution in the secondary battery makes it difficult for the sodium metal to form a film. The sodium metal is less prone to forming the SEI film in the electrolyte solution, and can be deposited well, which is beneficial to prolonging the cycle life of the secondary battery.

When the secondary battery in the present application is charged at the charging plateau voltage of the sodium-ion positive electrode active material, a sodium metal layer is first formed on a surface of the negative electrode current collector, and sodium ions are repeatedly deposited and stripped on the surface of the negative electrode current collector, which can achieve the long-term cycling performance of the secondary battery. When the secondary battery is continuously charged to a voltage above the charging plateau voltage of the lithium-ion positive electrode active material, lithium ions are deposited on the surface of the sodium metal layer to form a lithium metal plating layer. The lithium metal plating layer can react with a film-forming component in the electrolyte solution to form the stable SEI film to isolate a negative electrode from the electrolyte solution, thereby reducing the probability of reaction between the negative electrode and the electrolyte solution, and improving the stability of the lithium-sodium metal as the negative electrode. Therefore, the secondary battery provided in the present application can be improved in both the cycling performance and the storage performance.

### [Positive electrode material]

According to some embodiments of the present application, the charging plateau voltage of the sodium-ion positive electrode active material in the battery is at least 0.1 V lower than the charging plateau voltage of the lithium-ion positive electrode active material in the battery.

In the present application, a charging plateau of the lithium-ion positive electrode active material and a charging plateau of the sodium-ion positive electrode active material are controlled to have a difference in voltage, and the lithium metal prone to forming the stable SEI film serves as a protective layer to be plated on the surface of the sodium metal by means of high-voltage charging to prevent a continuous reaction between the sodium metal and the electrolyte solution, thereby prolonging the storage life of the secondary battery.

According to some embodiments of the present application, the charging plateau voltage of the sodium-ion positive electrode active material in the battery is 0.1 V to 1 V lower than the charging plateau voltage of the lithium-ion positive electrode active material in the battery.

In the present application, if the difference between the charging plateau voltage of the sodium-ion positive electrode active material and the charging plateau voltage of the lithium-ion positive electrode active material is greater than 1 V, there is a higher selectivity requirement for the positive electrode active material, which is not easy to meet according to existing types of positive electrode active materials.

According to some embodiments of the present application, the charging plateau voltage of the sodium-ion positive electrode active material in the battery is 0.2 V to 0.6 V lower than the charging plateau voltage of the lithium-ion positive electrode active material in the battery.

In the present application, the difference between the charging plateau voltage of the sodium-ion positive electrode active material and the charging plateau voltage of the lithium-ion positive electrode active material is selected to be 0.2 V to 0.6 V, which not only better improves the cycling performance and storage performance of the secondary battery, but also makes it easier to select the positive electrode active material. This is beneficial to meeting the requirements of industrial production.

According to some embodiments of the present application, the charging plateau voltage of the sodium-ion positive electrode active material in the battery is 2.0 V to 3.6 V.

According to some embodiments of the present application, the charging plateau voltage of the sodium-ion positive electrode active material in the battery is 3.2 V to 3.4 V.

In the present application, a specific method for testing the charging plateau voltage of the sodium-ion positive electrode active material includes: preparing the sodium-ion positive electrode active material into a button cell, and performing a charging test on the button cell at a current density of 1 mA/cm², with a cut-off voltage of 2.0 V to 4.3 V; drawing a charging characteristic curve with a capacity as an abscissa and a voltage as an ordinate, and determining the charging plateau voltage based on the charging characteristic curve, where the charging plateau voltage refers to a voltage corresponding to a minimum voltage change and a large capacity change, and can be obtained by a peak value of dQ/dV.

For a positive electrode active material with a relatively obvious charging plateau voltage, the charging plateau voltage is relatively easy to measure or calculate. For a positive electrode active material with a charging plateau voltage that is not particularly obvious, the charging plateau voltage may be replaced by an average voltage, where the average voltage is an effective area (battery charging energy) of the charging characteristic curve divided by the capacity.

According to some embodiments of the present application, the sodium-ion positive electrode active material includes any one or a combination of two or more of a polyanionic compound or a Prussian blue-like compound.

In the present application, the polyanionic compound includes one or more of sodium vanadium trifluorophosphate (Na₃V₂(PO₄)₂F₃), sodium vanadium fluorophosphate (NaVPO₄F), sodium vanadium phosphate (Na₃V₂(PO₄)₃), Na₄Fe₃(PO₄)₂P₂0₇, and NaFePO₄. The Prussian blue-like compound is NaₓM₁M₂(CN)₆, where M₁ and M₂ each include one or more of Fe, Mn, Co, Ni, Cu, Zn, Cr, Ti, V, Zr, and Ce, and 0 < x ≤ 2.

According to some embodiments of the present application, the sodium-ion positive electrode active material includes one or a combination of two or more of Na₃V₂(PO₄)₃, Na₂Fe[Fe(CN)₆], Na₂Mn[Fe(CN)₆], and Na₂Mn[Mn(CN)₆]. In a specific embodiment of the present application, several specific sodium-ion positive electrode active materials are selected, which are mainly used to illustrate that the technical problem of the present application can be solved by the difference between the charging plateau voltages.

According to some embodiments of the present application, the charging plateau voltage of the lithium-ion positive electrode active material in the battery is 3.0 V to 4.3 V.

According to some embodiments of the present application, the charging plateau voltage of the lithium-ion positive electrode active material in the battery is 3.4 V to 4.0 V.

In the present application, a specific method for testing the charging plateau voltage of the lithium-ion positive electrode active material includes: preparing the lithium-ion positive electrode active material into a button cell, and performing a charging test on the button cell at a current density of 1 mA/cm², with a cut-off voltage of 2.0 V to 4.3 V; and drawing a charging characteristic curve with a capacity as an abscissa and a voltage as an ordinate, and determining the charging plateau voltage based on the charging characteristic curve. The charging plateau voltage refers to a voltage corresponding to a minimum voltage change and a large capacity change, and may be obtained by a peak value of dQ/dV.

For a positive electrode active material with a relatively obvious charging plateau voltage, such as lithium iron phosphate, the charging plateau voltage is relatively easy to measure or calculate. For a positive electrode active material with a charging plateau voltage that is not particularly obvious, the charging plateau voltage may be replaced by an average voltage, where the average voltage is an effective area (battery charging energy) of the charging characteristic curve divided by the capacity.

According to some embodiments of the present application, the lithium-ion positive electrode active material includes one or a combination of two or more of lithium cobalt oxide, lithium nickel oxide, lithium manganese oxide, lithium nickel manganese oxide, lithium nickel cobalt manganese oxide, lithium nickel cobalt aluminum oxide, and olivine-structured lithium-containing phosphate. For example, the positive electrode active material includes, but is not limited to, one or two or more of LiCoO₂, LiNiO₂, LiMnO₂, LiMn₂O₄, LiNi_{1/3}Co_{1/3}Mn_{1/3}O₂(NCM111), LiNi_{0.5}Co_{0.2}Mn_{0.3}O₂(NCM523), LiNi_{0.5}Co_{0.3}Mn_{0.2}O₂(NCM532), LiNi_{0.6}CO_{0.2}Mn_{0.2}O₂(NCM622), LiNi_{0.8}CO_{0.1}Mn_{0.1}O₂(NCM811), LiNi_{0.85}CO_{0.15}Al_{0.05}O₂, LiFePO₄(LFP), and LiMnPO₄.

According to some embodiments of the present application, a structural formula of the olivine-structured lithium-containing phosphate is as follows: LiFe_{1-x-y}MnₓM_{y}PO₄, where 0 ≤ x ≤ 1, 0 ≤ y < 1, 0 ≤ x + y ≤ 1, M includes one or a combination of two or more of other transition metal elements or non-transition metal elements other than Fe and Mn, and M preferably includes one or a combination of two or more of Cr, Mg, Ti, Al, Zn, W, Nb, and Zr.

According to some embodiments of the present application, the lithium-ion positive active material includes one or a combination of two or more of LiFePO₄, LiMn₂O₄, LiCoO₂, and LiNi_{0.8}CO_{0.1}Mn_{0.1}O₂. In a specific embodiment of the present application, several specific sodium-ion positive electrode active materials are selected, which are mainly used to illustrate that the technical problem of the present application can be solved by the difference between the charging plateau voltages.

According to some embodiments of the present application, when the secondary battery is charged at the charging plateau voltage of the sodium-ion positive electrode active material, a sodium metal layer is formed on the surface of the negative electrode current collector; and when the secondary battery is charged at the charging plateau voltage of the lithium-ion positive electrode active material, a lithium metal plating layer is formed on the surface of the sodium metal layer.

In the present application, the sodium ions are deposited on the surface of the negative electrode current collector. Since a voltage during deposition is the charging plateau voltage of the sodium-ion positive electrode active material, it is beneficial to the deposition uniformity of the sodium metal, thus enabling the reversible progress of the charge-discharge process. Moreover, the usage amount of the sodium-ion positive electrode active material affects the charge-discharge process. A specific usage amount of the sodium-ion positive electrode active material is not limited in the present application. Meanwhile, when the secondary battery is continuously charged with the charging plateau voltage of the lithium-ion positive electrode active material, lithium ions are deposited on the surface of the sodium metal layer to form a lithium metal plating layer. The lithium metal plating layer includes a stable SEI film, thus improving the stability of the lithium metal plating layer. The lithium metal plating layer prevents a reaction between the sodium metal and the electrolyte solution to prolong the storage life of the secondary battery.

According to some embodiments of the present application, a thickness of the lithium metal plating layer is 0.5 µm to 3.0 µm.

In the present application, the thickness of the lithium metal plating layer may be obtained by means of photographing and calculation. For example, the secondary battery is disassembled, the positive electrode material is photographed, and then the thickness of the lithium metal plating layer is directly measured. Specifically, a deposition morphology of a sample and the thickness of the lithium metal plating layer are observed by using a scanning electron microscope (SEM, PHILIPS, XL-30FG). The thickness section sample may be prepared through liquid nitrogen embrittlement fracture or by using an ion beam polisher, and may be semi-quantitatively analyzed by an energy spectrum analysis system equipped in the SEM.

The lithium metal plating layer in the present application cannot be too thick or too thin. If the lithium metal plating layer is too thick, the usage amount of the sodium-ion positive electrode active material is affected during charging and discharging of the battery, and ultimately the cycling performance of the secondary battery may be affected. If the lithium metal plating layer is relatively thin, it cannot effectively isolate the sodium metal from the electrolyte solution, so that the storage performance of the secondary battery may be affected. Moreover, the thickness of the lithium metal plating layer is determined by the usage amount of the lithium-ion positive electrode active material. Conversely, the usage amount of the lithium-ion positive electrode active material can be calculated based on the thickness of the lithium metal plating layer. A specific calculation method may include: converting the lithium metal to 0.206 mAh/(µm·cm²). Thus, if a lithium metal layer with a thickness of 0.1-8 µm is required, an areal capacity of a positive electrode should be 0.0206-1.648 mAh/cm². According to the areal capacity range in combination with gram capacity data m mAh/g of the lithium-ion positive electrode active material, a mass of the lithium-ion positive electrode active material per unit area can be obtained as (0.0206-1.648)÷m g/cm². In the present application, when the thickness of the lithium metal plating layer is selected to be 0.5 µm to 3.0 µm, the cycling performance and storage performance of the secondary battery can be relatively friendly improved.

The thickness of the lithium metal plating layer in the present application may be one of 0.5 µm, 0.8 µm, 1.0 µm, 1.2 µm, 1.5 µm, 1.7 µm, 2.0 µm, 2.5 µm, and 3.0 µm or any one of values within the range.

According to some embodiments of the present application, a binder and/or a conductive agent may also be added to the positive electrode active material. The type of the binder and the type of the conductive agent are not limited and can be selected by those skilled in the art according to actual requirements. For example, the binder may include one or more of polyvinylidene fluoride (PVDF), polytetrafluoroethylene (PTFE), polyacrylic acid (PAA), polyvinyl alcohol (PVA), and styrene-butadiene rubber (SBR), and the conductive agent may include one or more of graphite, superconducting carbon, acetylene black, carbon black, carbon nanotubes, graphene, and carbon nanofibers.

According to some embodiments of the present application, the positive electrode current collector may be a metal foil or a composite current collector, where the metal foil may be an aluminum foil, and the composite current collector may include a polymer material base layer and a metal layer formed on at least one surface of the polymer material base layer. The composite current collector may be formed by forming a metal material such as aluminum, aluminum alloy, nickel, nickel alloy, titanium, titanium alloy, silver, or silver alloy on a base material of a polymer material such as polypropylene (PP), polyethylene terephthalate (PET), polybutylene terephthalate (PBT), polystyrene (PS), or polyethylene (PE).

### [Negative electrode sheet]

According to some embodiments of the present application, the negative electrode sheet is a negative electrode current collector. The negative electrode current collector may be a negative electrode current collector substrate, or may be a negative electrode current collector substrate and a modification layer disposed on at least one side surface of the negative electrode current collector substrate. Meanwhile, a method for forming the modification layer on a surface of the negative electrode current collector substrate includes any conventional form in the art, such as deposition and coating.

In the present application, the modification layer is used to reduce the deposition potential of the metal, can induce metal ions to be deposited evenly on the surface of the negative electrode to form a compact SEI film, inhibits formation of metal dendrites, and has a direct effect on improving the cycling stability of the secondary battery. A material of the modification layer includes, but is not limited to, any one or a combination of two or more of an inorganic metal element, an inorganic oxide, and an organic substance. For example, the inorganic metal element includes any one or a combination of two or more of platinum, aluminum, magnesium, zinc, gold, silver, and tin. The inorganic oxide includes any one or a combination of two or more of aluminum oxide, silicon dioxide, and titanium dioxide. The organic substance includes polydimethylsiloxane, graphene oxide, silica-polymethylmethacrylate, and the like.

In the present application, the negative electrode current collector substrate may be a metal foil or a composite current collector, where the metal foil may be a copper foil, and the composite current collector may include a polymer material base layer and a metal layer formed on at least one surface of the polymer material base layer. The composite current collector may be formed by forming a metal material such as copper, copper alloy, nickel, nickel alloy, titanium, titanium alloy, silver, or silver alloy on a base material of a polymer material such as polypropylene (PP), polyethylene terephthalate (PET), polybutylene terephthalate (PBT), polystyrene (PS), or polyethylene (PE).

### [Separator]

In the present application, the separator located between the positive electrode sheet and the negative electrode sheet may be any well-known porous separator with good chemical and mechanical stability. For example, a material of the separator may include, but is not limited to, one or a combination of two or more of glass fibers, nonwoven fabrics, polyethylene, polypropylene, and polyvinylidene fluoride. The separator may be a single-layer thin film or may be a multi-layer composite thin film, which is not particularly limited. When the separator is a multi-layer composite thin film, materials of each layer may be the same or different, which is not particularly limited.

To make the objectives, technical solutions and advantages of the present application clearer, the sodium battery separator and the sodium replenishing method protected by the present application will be described in detail below in conjunction with specific embodiments. The various chemical substances, reagents, and the like used in the following examples are all of any conventional types and manufacturers in the art.

### [Preparation of positive electrode sheet]

### Example 1

A method for preparing a positive electrode sheet is provided, including the following preparation process:

LiFePO₄ (10wt%), Na₂Fe[Fe(CN)₆] (85.7wt%), acetylene black as a conductive agent, and PVDF as a binder were selected and uniformly mixed in N-methylpyrrolidone (NMP) as a solvent at a mass ratio of 95.7 : 2.3 : 2 to prepare a positive electrode slurry, the positive electrode slurry was applied onto a surface of an aluminum foil by using an extrusion coater and dried, and then the coated electrode sheet was compacted by a cold press for cold pressing treatment, to obtain a positive electrode sheet with an areal capacity of 3 mAh/cm².

### Determination of parameters related to positive electrode sheet:

(1) Test for charging plateau voltage of sodium-ion positive electrode active material: Na₂Fe[Fe(CN)₆] was prepared into a button cell, and a charging test was performed on the button cell at a current density of 1 mA/cm², with a cut-off voltage of 2.0 V to 4.3 V; and a charging characteristic curve was drawn with a capacity as an abscissa and a voltage as an ordinate, and a charging plateau voltage was determined based on the charging characteristic curve, where the charging plateau voltage was obtained by a peak value of dQ/dV.
(2) Test for charging plateau voltage of lithium-ion positive electrode active material: LiFePO₄ was prepared into a button cell, and a charging test was performed on the button cell at a current density of 1 mA/cm², with a cut-off voltage of 2.0 V to 4.3 V; and a charging characteristic curve was drawn with a capacity as an abscissa and a voltage as an ordinate, and a charging plateau voltage was determined based on the charging characteristic curve, where the charging plateau voltage was obtained by a peak value of dQ/dV.

Relevant parameters of positive electrode sheets provided in Example 1 to Example 19 and Comparative Example 1 are as shown in Table 1.

**Table 1 List of parameters for positive electrode sheet**

| | Lithium-ion positive electrode active material | | Sodium-ion positive electrode active material | | Charging plateau voltage difference in V |
|---|---|---|---|---|---|
| | Type | Charging plateau voltage in V | Type | Charging plateau voltage in V | |
| Example 1 | LiFePO₄ | 3.4 | Na₂Fe[Fe(CN)₆] | 3.2 | 0.2 |
| Example 2 | LiMn₂O₄ | 4.0 | Na₃V₂(PO₄)₃ | 3.4 | 0.6 |
| Example 3 | LiCoO₂ | 3.7 | Na₂Mn[Fe(CN)₆] | 3.2 | 0.5 |
| Example 4 | NCM811 | 3.6 | Na₂Mn[Mn(CN)₆] | 3.2 | 0.4 |
| Example 5 | NCM811 | 3.6 | Na₃V₂(PO₄)₃ | 3.4 | 0.2 |
| Example 6 | LiCoO₂ | 3.7 | Na₃V₂(PO₄)₃ | 3.4 | 0.3 |
| Example 7 | LiFePO₄ | 3.4 | Na₂Mn[Fe(CN)₆] | 3.2 | 0.2 |
| Example 8 | LiFePO₄ | 3.4 | Na₂Fe[Fe(CN)₆] | 3.2 | 0.2 |
| Example 9 | LiFePO₄ | 3.4 | Na₂Fe[Fe(CN)₆] | 3.2 | 0.2 |
| Example 10 | LiFePO₄ | 3.4 | Na₂Fe[Fe(CN)₆] | 3.2 | 0.2 |
| Example 11 | LiFePO₄ | 3.4 | Na₂Fe[Fe(CN)₆] | 3.2 | 0.2 |
| Example 12 | LiFePO₄ | 3.4 | Na₂Fe[Fe(CN)₆] | 3.2 | 0.2 |
| Example 13 | LiFePO₄ | 3.4 | Na₂Fe[Fe(CN)₆] | 3.2 | 0.2 |
| Example 14 | LiFePO₄ | 3.4 | Na₂Fe[Fe(CN)₆] | 3.2 | 0.2 |
| Example 15 | LiFePO₄ | 3.4 | Na₂Fe[Fe(CN)₆] | 3.2 | 0.2 |
| Example 16 | LiFePO₄ | 3.4 | Na₂Fe[Fe(CN)₆] | 3.2 | 0.2 |
| Example 17 | LiFePO₄ | 3.4 | Na₂Fe[Fe(CN)₆] | 3.2 | 0.2 |
| Example 18 | LiFePO₄ | 3.4 | Na₂Fe[Fe(CN)₆] | 3.2 | 0.2 |
| Example 19 | NCM811 | 3.6 | Na₃V₂(PO₄)₃ | 3.4 | 0.2 |
| Comparative Example 1 | None | - | Na₂Fe[Fe(CN)₆] | 3.2 | - |

In the present application, for the lithium-ion positive active material, the olivine-structured lithium-containing phosphate includes, but is not limited to, LiFePO₄, the lithium manganese oxide includes, but is not limited to, LiMn₂O₄, the lithium cobalt oxide includes, but is not limited to, LiCoO₂, and the lithium nickel cobalt manganese oxide includes, but is not limited to, NCM811. The present application mainly discusses that LiFePO₄, LiMn₂O₄, LiCoO₂, or LiNi_{0.8}CO_{0.1}Mn_{0.1}O₂ serves as the lithium-ion positive active material to be compounded with the sodium-ion positive active material to form the charging plateau voltage difference in Table 1. Other lithium nickel manganese oxides and lithium nickel cobalt aluminum oxides that meet the conditions should also be within the protection scope of the present application.

Similarly, in the present application, for the sodium-ion positive electrode active material, the polyanionic compound includes, but is not limited to, Na₃V₂(PO₄)₃, and the Prussian blue-like compound includes, but is not limited to, Na₂Fe[Fe(CN)₆], Na₂Mn[Fe(CN)₆], and Na₂Mn[Mn(CN)₆]. The present application mainly discusses that Na₃V₂(PO₄)₃, Na₂Fe[Fe(CN)₆], Na₂Mn[Fe(CN)₆], or Na₂Mn[Mn(CN)₆] serves as the sodium-ion positive electrode active material to be compounded with the lithium-ion positive electrode active material to form the charging plateau voltage difference in Table 1. Other sodium-ion positive electrode active materials that meet the conditions should also be within the protection scope of the present application.

### [Preparation of negative electrode sheet]

A copper foil with a thickness of 8 µm is selected as a negative electrode current collector to prepare a negative electrode.

### [Preparation of electrolyte solution]

The electrolyte solution in the embodiment of the present application contains an ether-based solvent, lithium salt, and sodium salt. The ether-based solvent includes one or a combination of two or more of dimethoxymethane, dimethoxyethane, and diethoxyethane. The lithium salt includes one or a combination of two or more of lithium bis(fluorosulfonyl)imide (LiFSI), lithium bis(oxalato)borate (LiBOB), and lithium bis(trifluoromethanesulfonyl)imide (LiTFSI). Tthe sodium salt includes one or a combination of two or more of sodium hexafluorophosphate (NaPF₆), sodium hexafluoroarsenate (NaAsF₆), and sodium tetrafluoroborate. Moreover, the concentration of the lithium salt is 0.1 mol/L to 0.2 mol/L, and the concentration of the sodium salt is 0.8 mol/L to 1.5 mol/L.

### Determination of parameters related to electrolyte solution:

(3) Test for deposition overpotential in electrolyte solution: an overpotential of a Li-Li symmetric cell was tested using a Neware charge-discharge machine (type); and the cell was charged for 1 h and then discharged for 1 h at a current density of 1 mA/cm⁻², each charge-discharge process was regarded as one cycle, with 100 cycles as a cut-off condition, an E-t curve was drawn, and the stability of the electrolyte solution was evaluated through potential fluctuation. An overpotential of a film-forming passivating electrolyte solution is approximately 50 mV or more.
(4) Test for deposition overpotential in electrolyte solution: an overpotential of a Na-Na symmetric cell was tested using a Neware charge-discharge machine (type); and the cell was charged for 1 h and then discharged for 1 h at a current density of 1 mA/cm⁻², each charge-discharge process was regarded as one cycle, with 100 cycles as a cut-off condition, an E-t curve was drawn, and the stability of the electrolyte solution was evaluated through potential fluctuation. An overpotential of an electrolyte solution with poor film-forming property is approximately 5 mV.

Relevant parameters of electrolyte solutions provided in Example 1 to Example 19 and Comparative Example 1 are as shown in Table 2.

**Table 2 List of parameters for electrolyte solution**

| | Lithium Salt | | | Sodium salt | | | Deposition overpotential difference in mV | Solvent |
|---|---|---|---|---|---|---|---|---|
| | Type | Deposition overpotential in mV | Concentration in mol/L | Type | Deposition overpotential in mV | Concentration in mol/L | | Type |
| Example 1 | Lithium bis(oxalato)borate | 52 | 0.15 | Sodium hexafluorophosphate | 11 | 1 | 41 | Dimethoxyethane |
| Example 2 | Lithium bis(oxalato)borate | 52 | 0.15 | Sodium hexafluorophosphate | 11 | 1 | 41 | Dimethoxyethane |
| Example 3 | Lithium bis(oxalato)borate | 52 | 0.15 | Sodium hexafluorophosphate | 11 | 1 | 41 | Dimethoxyethane |
| Example 4 | Lithium bis(oxalato)borate | 52 | 0.15 | Sodium hexafluorophosphate | 11 | 1 | 41 | Dimethoxyethane |
| Example 5 | Lithium bis(oxalato)borate | 52 | 0.15 | Sodium hexafluorophosphate | 11 | 1 | 41 | Dimethoxyethane |
| Example 6 | Lithium bis(oxalato)borate | 52 | 0.15 | Sodium hexafluorophosphate | 11 | 1 | 41 | Dimethoxyethane |
| Example 7 | Lithium bis(oxalato)borate | 52 | 0.15 | Sodium hexafluorophosphate | 11 | 1 | 41 | Dimethoxyethane |
| Example 8 | Lithium bis(fluorosulfonyl)imide | 43 | 0.15 | Sodium hexafluorophosphate | 11 | 1 | 32 | Dimethoxyethane |
| Example 9 | Lithium bis(oxalato)borate | 52 | 0.15 | Sodium tetrafluoroborate | 5 | 1 | 47 | Dimethoxyethane |
| Example 10 | Lithium bis(trifluoromethanesulfonyl)imide | 61 | 0.15 | Sodium hexafluorophosphate | 11 | 1 | 50 | Dimethoxyethane |
| Example 11 | Lithium bis(oxalato)borate | 52 | 0.15 | Sodium hexafluoroarsenate | 15 | 1 | 37 | Dimethoxyethane |
| Example 12 | Lithium bis(fluorosulfonyl)imide | 43 | 0.15 | Sodium hexafluorophosphate | 11 | 1 | 32 | Dimethoxyethane |
| Example 13 | Lithium bis(fluorosulfonyl)imide | 43 | 0.15 | Sodium tetrafluoroborate | 5 | 1 | 38 | Dimethoxyethane |
| Example 14 | Lithium bis(oxalato)borate | 37 | 0.1 | Sodium hexafluorophosphate | 11 | 1 | 26 | Dimethoxyethane |
| Example 15 | Lithium bis(oxalato)borate | 46 | 0.2 | Sodium hexafluorophosphate | 11 | 1 | 35 | Dimethoxyethane |
| Example 16 | Lithium bis(oxalato)borate | 52 | 0.15 | Sodium hexafluorophosphate | 10 | 0.8 | 42 | Dimethoxyethane |
| Example 17 | Lithium bis(oxalato)borate | 52 | 0.15 | Sodium hexafluorophosphate | 11 | 1.5 | 41 | Dimethoxyethane |
| Example 18 | Lithium bis(trifluoromethanesulfonyl)imide | 61 | 0.15 | Sodium tetrafluoroborate | 5 | 1 | 56 | Dimethoxymethane |
| Example 19 | Lithium bis(trifluoromethanesulfonyl)imide | 61 | 0.15 | Sodium hexafluoroarsenate | 15 | 1 | 46 | Diethoxyethane |
| Comparative Example 1 | - | - | - | Sodium hexafluorophosphate | 11 | 1 | - | Dimethoxyethane |

In the present application, the film-forming selectivity of the electrolyte solution is further explored based on different types and concentrations of electrolyte salts in Table 2.

### [Separator]

A polypropylene film is selected.

### [Preparation of secondary battery]

According to some embodiments of the present application, the prepared negative electrode sheet, separator and positive electrode sheet were stacked in sequence, the separator was located between the positive and negative electrode sheets to play a separating role and was wound to obtain a bare cell, and the bare cell was baked at 100°C to remove water and then was injected with an electrolyte solution and sealed, followed by procedures such as standing, hot-cold pressing, formation, secondary electrolyte solution injection, aging, shaping, and capacity testing, to obtain a secondary battery.

### Comparative Example 1

A secondary battery is provided, which differs from Example 1 in that the positive electrode active material includes only Na₂Fe[Fe(CN)₆].

### [Test for performance of secondary battery]

### (5) Test for cycling performance of secondary battery:

The secondary battery was charged at 25°C with a constant current of 1.5 mA·cm⁻² to 4.3 V, then charged at a constant voltage of 4.3 V until the current dropped to 0.3 mA·cm⁻², and then discharged with a constant current of 1.5 mA·cm⁻² to 2.8 V to obtain a first-cycle discharge specific capacity (Cd1); and the charging and discharging were repeated until the number of cycles corresponding to the capacity fading to 80% was reached.

### (6) Test for storage performance of battery:

The secondary battery was charged and discharged at a low current of 0.1C once, and a discharge capacity C1 was recorded. The battery cell was fully charged and placed in an environment at 25°C, a voltage change of the battery cell was monitored, and Cn was recorded by charging and discharging once at a low current every 20 h. When the measured irreversible capacity fades to 80% of an initial capacity, the storage time at this time was recorded as the storage life.

The specific performance of the secondary battery is as shown in Table 3.

**Table 3 List of battery performance**

| | Thickness of lithium metal plating layer of negative electrode in µm | Number of cycles corresponding to capacity fading to 80% (cycles) | Storage time when irreversible capacity fades to 80% of initial capacity (days) |
|---|---|---|---|
| Example 1 | 1 | 4258 | 186 |
| Example 2 | 1 | 4156 | 182 |
| Example 3 | 1 | 3895 | 178 |
| Example 4 | 1 | 3968 | 168 |
| Example 5 | 1 | 4286 | 166 |
| Example 6 | 1 | 4081 | 174 |
| Example 7 | 1 | 4370 | 188 |
| Example 8 | 1 | 3958 | 179 |
| Example 9 | 1 | 4214 | 184 |
| Example 10 | 1 | 4261 | 179 |
| Example 11 | 1 | 4182 | 169 |
| Example 12 | 1 | 4167 | 175 |
| Example 13 | 1 | 4108 | 168 |
| Example 14 | 1 | 4137 | 192 |
| Example 15 | 1 | 4214 | 184 |
| Example 16 | 1 | 4085 | 185 |
| Example 17 | 1 | 4067 | 176 |
| Example 18 | 1 | 4187 | 183 |
| Example 19 | 1 | 4172 | 188 |
| Comparative Example 1 | - | 3890 | 18 |

In the present application, the influences of different types of positive electrode active materials on the performance of the secondary battery are explored in Examples 1 to 7, and the influences of different electrolyte solutions on the performance of the secondary battery are explored in Examples 8 to 17. Meanwhile, in the embodiment of the present application, the case where the thickness of the lithium metal plating layer is 1 µm has been explored. The thickness of the lithium metal plating layer can be controlled between 0.5 µm and 3.0 µm by adjusting the content of each component in the positive electrode active material.

It can be seen from Table 3 that the secondary battery designed in the present application can be improved in both the cycling performance and the storage performance.

Finally, it should be noted that the above embodiments are only for the purpose of illustrating the technical solutions of the present application and are not to be construed as limiting the present application. Although the present application has been described in detail with reference to the above embodiments, it should be understood by a person of ordinary skill in the art that modifications may be made to the technical solutions described in the above embodiments, or equivalent replacement may be made to some or all of the technical features thereof. However, the modifications or replacements do not make the nature of corresponding technical solutions depart from the scope of the technical solutions of the embodiments of the present application, all of which shall fall within the scope of the claims and the description of the present application. **In** particular, the technical features mentioned in the embodiments may be combined in any manner provided that there is no structural conflict. The present application is not limited to the specific embodiments disclosed herein, but includes all technical solutions falling within the scope of the claims.

## Claims

1. An electrolyte solution, wherein the electrolyte solution contains sodium salt and lithium salt, and a deposition overpotential of lithium metal in the electrolyte solution is higher than a deposition overpotential of sodium metal.

2. The electrolyte solution according to claim 1, wherein the deposition overpotential of the lithium metal in the electrolyte solution is higher than the deposition overpotential of the sodium metal by 20 mV or more.

3. The electrolyte solution according to either of claims 1 and 2, wherein the electrolyte solution satisfies one or a combination of the following two conditions:
(1.1) the deposition overpotential of the lithium metal in the electrolyte solution is greater than 30 mV, preferably 32 mV to 70 mV; and
(1.2) the deposition overpotential of the sodium metal in the electrolyte solution is less than 20 mV, preferably 5 mV to 18 mV.

4. The electrolyte solution according to any one of claims 1 to 3, wherein a concentration of the lithium salt is lower than a concentration of the sodium salt.

5. The electrolyte solution according to either of claims 1 and 4, wherein the electrolyte solution satisfies one or a combination of the following two conditions:
(2.1) the concentration of the lithium salt is not lower than 0.1 mol/L, preferably 0.1 mol/L to 0.2 mol/L; and
(2.2) the concentration of the sodium salt is not lower than 0.8 mol/L, preferably 0.8 mol/L to 1.5 mol/L.

6. The electrolyte solution according to any one of claims 1 to 5, wherein the lithium salt comprises one or a combination of two or more of lithium bis(fluorosulfonyl)imide, lithium bis(oxalato)borate, and lithium bis(trifluoromethanesulfonyl)imide.

7. The electrolyte solution according to any one of claims 1 to 6, wherein the sodium salt comprises one or a combination of two or more of sodium hexafluorophosphate, sodium hexafluoroarsenate, and sodium tetrafluoroborate.

8. The electrolyte solution according to any one of claims 1 to 7, wherein the electrolyte solution contains an ether-based solvent; and
preferably, the ether-based solvent comprises one or a combination of two or more of dimethoxymethane, dimethoxyethane, and diethoxyethane.

9. A secondary battery, comprising the electrolyte solution according to any one of claims 1 to 8.

10. The secondary battery according to claim 9, further comprising:
a positive electrode sheet, comprising a positive electrode current collector and a positive electrode active material disposed on at least one side surface of the positive electrode current collector;
a negative electrode sheet, comprising a negative electrode current collector; and
a separator,
wherein the positive electrode active material comprises a sodium-ion positive electrode active material and a lithium-ion positive electrode active material, and a charging plateau voltage of the sodium-ion positive electrode active material in the battery is lower than a charging plateau voltage of the lithium-ion positive electrode active material in the battery.

11. The secondary battery according to either of claims 9 and 10, wherein the charging plateau voltage of the sodium-ion positive electrode active material in the battery is at least 0.1 V lower than the charging plateau voltage of the lithium-ion positive electrode active material in the battery, preferably 0.1 V to 1 V, and more preferably 0.2 V to 0.6 V.

12. The secondary battery according to any one of claims 9 to 11, wherein the charging plateau voltage of the sodium-ion positive electrode active material in the battery is 2.0 V to 3.6 V, preferably 3.2 V to 3.4 V.

13. The secondary battery according to any one of claims 9 to 12, wherein the sodium-ion positive electrode active material comprises one or a combination of two or more of a polyanionic compound or a Prussian blue-like compound;
preferably, the sodium-ion positive electrode active material comprises one or a combination of two or more of Na₃V₂(PO₄)₃, Na₂Fe[Fe(CN)₆], Na₂Mn[Fe(CN)₆], and Na₂Mn[Mn(CN)₆].

14. The secondary battery according to any one of claims 9 to 13, wherein the charging plateau voltage of the lithium-ion positive electrode active material in the battery is 3.0 V to 4.3 V, preferably 3.4 V to 4.0 V.

15. The secondary battery according to any one of claims 9 to 14, wherein the lithium-ion positive electrode active material comprises one or a combination of two or more of lithium cobalt oxide, lithium nickel oxide, lithium manganese oxide, lithium nickel manganese oxide, lithium nickel cobalt manganese oxide, lithium nickel cobalt aluminum oxide, and olivine-structured lithium-containing phosphate; and
preferably, the lithium-ion positive electrode active material comprises one or a combination of two or more of LiFePO₄, LiMn₂O₄, LiCoO₂, and LiNi_{0.8}CO_{0.1}Mn_{0.1}O₂.

16. The secondary battery according to any one of claims 9 to 15, wherein when the secondary battery is charged at the charging plateau voltage of the sodium-ion positive electrode active material, a sodium metal layer is formed on a surface of the negative electrode current collector;
when the secondary battery is charged at the charging plateau voltage of the lithium-ion positive electrode active material, a lithium metal plating layer is formed on a surface of the sodium metal layer; and
preferably, a thickness of the lithium metal plating layer is 0.5 µm to 3.0 µm.

17. The secondary battery according to any one of claims 9 to 16, wherein the negative electrode sheet is the negative electrode current collector.

18. An electric device, comprising the electrolyte solution according to any one of claims 1 to 8 or the secondary battery according to any one of claims 9 to 17.
